Europäisches Patentamt

European Patent Office

Office européen des brevets

(11) Numéro de publication: **0 326 548 B1**

## FASCICULE DE BREVET EUROPEEN

(45) Date de publication de fascicule du brevet: **23.09.92** (51) Int. Cl.5: **B65D 90/06**, B32B 15/12

(21) Numéro de dépôt: **87904696.9**

(22) Date de dépôt: **17.07.87**

(86) Numéro de dépôt internationale :
**PCT/FR87/00282**

(87) Numéro de publication internationale :
**WO 88/00565 (28.01.88 88/03)**

(54) **PANNEAU ISOLANT POUR REVETEMENT INTERNE DE CAPACITES DESTINEES AU TRANSPORT DE MARCHANDISES.**

(30) Priorité: **17.07.86 FR 8610515**

(43) Date de publication de la demande:
**09.08.89 Bulletin 89/32**

(45) Mention de la délivrance du brevet:
**23.09.92 Bulletin 92/39**

(84) Etats contractants désignés:
**BE CH LI**

(56) Documents cités:
**DE-A- 1 484 003**
**DE-A- 2 931 223**
**FR-A- 1 370 771**
**US-A- 2 070 346**
**US-A- 4 463 043**

(73) Titulaire: **ETS DAHER & CIE**
**50, bd des Dames**
**F-13002 Marseille(FR)**

(72) Inventeur: **DURAND, Gérard**
**35, bd Ernest Gasquy**
**F-13012 Marseille(FR)**

(74) Mandataire: **Moretti, René**
**c/o Cabinet BEAU DE LOMENIE**
**"Prado-Mermoz" 232, Avenue du Prado**
**F-13008 Marseille(FR)**

## Description

L'invention concerne un dispositif de panneaux isolants pour revêtement interne des capacités destinéés aux transport de marchandises selon le préambule de la revendication 1.

Il est destiné à isoler thermiquement avec un encombrement réduit les parois de capacités tels les conteneurs, carrosseries de véhicules ou similaires pour le transport de marchandises sensibles aux variations de température.

Il est connu de réaliser des parois isolantes par utilisation de surfaces thermiques isothermes homogènes assemblées par tous moyens appropriés pour recouvrir les parois des capacités de transport de marchandises sensibles aux changements de température.On a même utilisé des stratifications successives de matériaux divers superposés ou juxtaposés, mais on n'obtenait une protection efficace que proportionnellement aux épaisseurs des garnitures, ce qui exigeait un encombrement important réduisant le volume utilisable des capacités de transport augmentant leur poids sans assurer la rupture totale des transmissions d'énergie thermique.

Les brevets FR-A-1 370 771 et DE-A-2 931 223 décrivent des isolants thermiques composites composés de plusieurs couches alternées pouvant être séparées par des entretoises ou comporter de minces clinquants métalliques, mais ces dispositifs sont destinés à des applications bien spécifiques (récipients pour gaz liquéfiés ou isolation d'immeubles d'habitation) et ne peuvent être transposés à l'isolation d'enceintes pour transport de marchandises.

Le dispositif suivant l'invention supprime ces inconvénients et permet d'obtenir une isolation thermique optimale par l'alternance de barrières hétéroclites en matériaux divers constituant une série d'écrans de structures différentes créant des séries de solutions de continuité dans la transmission de la chaleur et des ondes électro-magnétiques, tout en réduisant les épaisseurs et les poids, de sorte que non seulement les encombrements sont réduits, les mises en place accélérées et les manutentions facilitées aussi bien pour leur transport que pour leur stockage.

Il est constitué, selon la revendication 1, par la combinaison de l'utilisation de la paroi résistante de la capacité, et des stratifications alternées de raidisseurs espaceurs, de lames d'air, de feuilles d'aluminium ou métalliques tendues sur support papier ou autre,et des surfaces rigides isolantes en résine synthétique rigide.

Sur les dessins annexés, donnés à titre d'exemple non limitatif, d'une des formes de réalisation de l'objet de l'invention :

La figure 1 est une vue en coupe représentant le positionnement des garnitures de matières différentes formant le panneau isolant.

La figure 2 montre vu en coupe et en élévation les éléments assemblés.

La figure 3 représente une variante d'exécution d'un panneau de fond porteur.

Ce panneau est constitué par l'assemblage des éléments isolants juxtaposés formé par la paroi rigide 1 métallique ou autre, sur la face interne de laquelle sont plaqués à intervalles appropriés les raidisseurs espaceurs 2, 3 en matériaux isolants afin de former un vide 4 intercalaire.

Sur ces espaceurs est placée une feuille d'aluminium ou film métallique 5 doublée de papier kraft ou similaire 6 tendue sur une surface plane continue et résistante en matériaux isolants 7 réalisant une barrière thermique sur toute sa surface.Sur cette paroi 7 sont disposés les raidisseurs espaceurs 8, 9 délimitant les intervalles 10 formant, soit des vides à lame d'air, soit des espaces remplis d'une garniture isolante telle une laine de verre ou autres fibres.

Ces raidisseurs en résine synthétique ou autres supportant la surface 11 en résine synthétique isolante sur laquelle se plaque une deuxième paroi en feuille aluminium 12 tendue sur papier kraft ou autre 13. Ce cloisonnement métallique supporte les raidisseurs extérieurs 14, 15 protégeant la paroi contre le contact des objets transportés tout en raidissant les garnitures isothermes et assurant une lame d'air isolante..

La partie horizontalebasse suivant les applications et pour permettre le chargement par engin de manutention à l'intérieur de la capacité isolée ne comporte pas de lames d'air, elle est alors formée par une feuille d'aluminium 16 tendue sur du papier kraft sur le plancher 17.

Cette surface 17 est recouverte par un élément isolant 18 en résine synthétique résistante, une feuille d'aluminium 19 également tendue sur une feuille de papier kraft recouvre le revêtement isolant 17.

Cet ensemble est recouvert par une surface 20 de matière isolante, soit synthétique, soit composite mais résistant aux chocs, rayures ou autres agressions mécaniques.

Le montage de ces panneaux sur les surfaces d'utilisation s'effectue par l'assemblage des divers éléments.

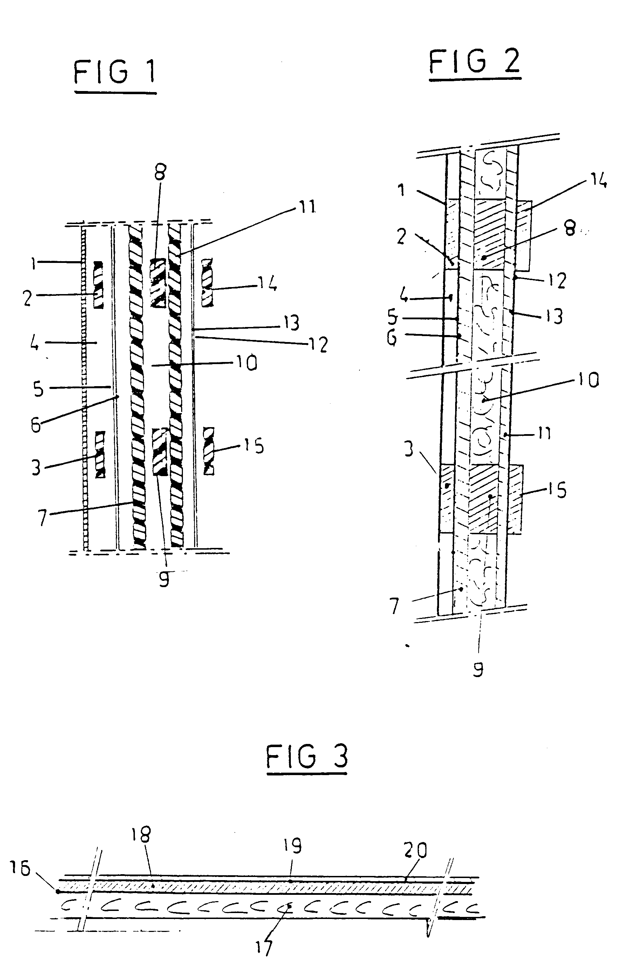

Le panneau horizontal (fig 3) est d'abord placé. Ensuite, les panneaux verticaux sont montés et assemblés en laissant à la partie supérieure un jeu suffisant pour positionner en partie supérieure un panneau horizontal de couverture avant chargement de la capacité.

Ce couvercle sera préférentiellement semblable à celui représenté sur les figures 1 et 2. les garnitures internes espaceuses écartant les marchandises et les parois assurent une troisième barrière isolante d'air augmentant encore l'isolation de l'intérieur.

Ces parois sont fabriquées à l'intérieur même des conteneurs, carrosseries ou autres engins de transport conditionnés ou supportés sur les parois existantes et peuvent être amovibles.

Par le positionnement auto-structuré et équilibré des divers éléments le constituant de ce panneau permet d'équiper rapidement les caisses de véhicules de transports, les remorques, wagons de chemin de fer, conteneurs, carènes, d'avions de transports et..., afin d'éviter les dégâts soit dus à un chocs thermique pouvant se produire à des températures entraînant des dommages aux denrées périssables ou autres.

La légèreté de l'élément isolant préfabricable en facilite la manutention et sa préfabrication industrielle.

Grâce aux effets thermiques mis en jeu on obtient un écran protecteur tant vis-à-vis de l'extérieur que de l'intérieur.

Enfin, le double écran de feuilles en aluminium ou métalliques protègent en outre la marchandise contre les ondes électro-magnétiques ; les effets sonores sont également arrêtés par les lames d'air et les éléments hétéroclites positionnés de façon à créer des solutions de continuité dans les transmissions de toutes énergies thermiques, sonores, électro-magnétiques (rayonnement).

Elles évitent avec un prix de revient réduit et un maximum d'efficacité toute cassure dans la chaîne du froid.

## Revendications

1. Dispositif de panneaux isolants pour revêtement interne des capacités destinées aux transport des marchandises, du type à plusieurs couches séparées par des entretoises, permettant d'isoler thermiquement les parois des conteneurs, carrosseries de véhicules ou similaires et de préserver les produits sensibles aux variations de température de toute possibilité de détérioration,

    caractérisé par la combinaison,

    - d'une part, de panneaux internes latéraux et horizontaux supérieurs, constitués successivement, en partant de la paroi extérieure (1) de la capacité, d'une première série de raidisseurs (2, 3) en matériau isolant, ménageant entre eux des espaces intercalaires (4) obturés par un film métallique (5) doublé de papier kraft (6) ou similaire tendu sur une surface plane rigide (7) continue et résistante en matériau isolant sur laquelle est disposée une deuxième série de raidisseurs (8, 9) délimitant des vides (10) et supportant une seconde surface plane rigide (11) en matériau isolant également revêtue d'un film métallique (12) doublé de papier kraft (13) ou similaire, ledit film métallique étant protégé du contact des objets transportés par une troisième série de raidisseurs (14, 15) espaceurs,

    - d'autre part, d'un panneau horizontal inférieur constitué, en partant du plancher (17) de la capacité d'un premier film métallique (16) doublé de papier kraft appliqué sur le plancher (17) et portant une plaque isolante (18), elle-même revêtue d'un second film métallique (19) doublé de papier kraft ou similaire recouverte par une plaque de protection (20) isolante résistant aux chocs et permettant l'utilisation d'engins de manutention.

2. Dispositif selon la revendication 1, se caractérisant par le fait que les raidisseurs (2, 3, 8, 9, 14, 15) et les surfaces planes rigides (7, 11) sont des plaques de résine synthétique isolante.

3. Dispositif selon l'une quelconque des revendications précédentes, se caractérisant par le fait que les films métalliques (5, 12, 16, 19) son constitués de feuilles d'aluminium.

4. Dispositif selon l'une quelconque des revendications précédentes, se caractérisant par le fait que les vides (10) délimités par les raidisseurs (8, 9) situés entre les deux surfaces planes rigides (7, 11) des panneaux latéraux et supérieurs sont rempli d'une garniture isolante telle que la laine de verre.

5. Dispositif selon l'une quelconque des revendications précédentes, se caractérisant par le fait que les panneaux sont réalisés pour pouvoir être assemblés dans la capacité, le panneau horizontal inférieur étant d'abord mis en place, puis les panneau latéraux dont la hauteur est telle qu'il subsiste un espace suffisant pour le panneau horizontal supérieur.

## Claims

1. Insulating panel device for internal lining of capacities intended for transporting goods, of the type having a plurality of layers separated by spacers, permitting the heat-insulation of the walls of the containers, vehicle bodyworks or similar, and the preservation of products sensitive to temperature variations, against all possibilities of deterioration,

characterized by the combination,

- on the one hand, of upper lateral and horizontal internal panels, successively constituted of, starting from the external wall (1) of the capacity, a first series of stiffeners (2, 3) in insulating material, providing between them intercalated spaces (4) obturated by a metallic film (5) lined with kraft paper (6) or similar stretched over a continuous and strong flat rigid surface (7) in insulating material on which is placed a second series of stiffeners (8, 9) defining gaps (10) and supporting a second rigid flat surface (11) in insulating material which is likewise coated with a metallic film (12) lined with kraft paper (13) or similar, said metallic film being protected from contact with the transported objects by a third series of spacing stiffeners (14, 15),

- on the other hand, of a lower horizontal panel constituted of, starting from the floor (17) of the capacity, a first metallic film (16) lined with kraft paper applied on the floor (17) and carrying an insulating plate (18), which is itself covered with a second metallic film (19) lined with kraft paper or similar covered with an insulating protective plate (20) which is shockproof and allows the use of handling equipment.

2. Device according to claim 1, being characterized by the fact that the stiffeners (2, 3, 8, 9, 14, 15) and the flat rigid surfaces (7, 11) are plates of insulating synthetic resin.

3. Device according to any one of the preceding claims, being characterized by the fact that the metallic films (5, 12, 16, 19) are constituted of aluminium sheets.

4. Device according to any one of the preceding claims, being characterized by the fact that the gaps (10) defined by the stiffeners (8, 9) situated between the two flat rigid surfaces (7, 11) of the upper and lateral panels are filled with an insulating packing such as glass wool.

5. Device according to any one of the preceding claims, being characterized by the fact that the panels are produced so as to be assembled in the capacity, the lower horizontal panel being positioned first, followed by the lateral panels whose height is such that enough space is left for the upper horizontal panel.

**Patentansprüche**

1. Vorrichtung aus Isolierplatten zur Innenauskleidung von Behältern für den Gütertransport, mit mehreren durch Distanzstücke voneinander getrennten Schichten, die eine thermische Isolierung von Behälterwänden, Fahrzeugkarosserien od. dgl. und die Bewahrung für auf Temperaturschwankungen empfindlichen Produkten vor einem möglichen Verderb gestatten, gekennzeichnet durch die Kombination

- einerseits von oberen seitlichen und horizontalen Innenplatten, die, ausgehend von der Außenwand (1) des Behälters, nacheinander durch eine erste Reihe von Stützleisten (2, 3) aus Isoliermaterial gebildet sind, welche dazwischen Zwischenräume (4) bilden, die durch eine mit Kraftpapier (6) od. dgl. kaschierte Metallfolie (5) verschlossen sind, welche über eine durchgehende und widerstandsfähige starre, plane Oberfläche (7) aus Isoliermaterial gespannt ist, auf der eine zweite Reihe von Stützleisten (8, 9) angeordnet ist, die Hohlräume (10) begrenzen und eine zweite starre plane Oberfläche (11) aus Isoliermaterial tragen, welche ebenfalls mit einer mit Kraftpapier (13) od. dgl. kaschierten Metallfolie (12) bedeckt ist, welche Metallfolie durch eine dritte Reihe von Abstands-Stützleisten einem Kontakt mit dem Transportgut geschützt ist,

- anderseits einer unteren horizontalen Platte, die, ausgehend von der Bodenplatte (17) des Behälters, durch eine erste mit Kraftpapier kaschierte Metallfolie (16) gebildet ist, die auf der Bodenplatte (17) aufgebracht ist und eine Isolierplatte (18) trägt, die ihrerseits mit einer zweiten mit Kraftpapier od. dgl. kaschierten Metallfolie (19) überzogen ist, weiche von einer isolierenden Schutzplatte (20) bedeckt ist, die stoßfest ist und die Anwendung von Fördereinrichtungen gestattet.

2. Vorrichtung nach Anspruch 1, dadurch gekennzeichnet, daß die Stützleisten (2, 3, 8, 9, 14, 15) und die starren planen Oberflächen (7, 11) Platten aus isolierendem Kunstharz sind.

3. Vorrichtung nach einem der vorhergehenden Ansprüche, dadurch gekennzeichnet, daß die Metallfolien (5, 12, 16, 19) aus Aluminiumblättern bestehen.

4. Vorrichtung nach einem der vorhergehenden Ansprüche, dadurch gekennzeichnet, daß die Hohlräume (10), die durch die zwischen den beiden starren planen Oberflächen (7, 11) der seitlichen und oberen Platten befindlichen Stützleisten (8, 9) begrenzt sind, mit einer Isolierpackung, wie Glaswolle, gefüllt sind.

5. Vorrichtung nach einem der vorhergehenden Ansprüche, dadurch gekennzeichnet, daß die Platten so gestaltet sind, daß sie im Behälter zusammengesetzt werden können, wobei die untere horizontale Platte zuerst an ihren Platz gebracht wird und dann die seitlichen Platten, deren Höhe derart ist, daß genügend Raum für die obere horizontale Platte bleibt.

FIG 1

FIG 2

FIG 3